# EUROPEAN PATENT SPECIFICATION

(11) **EP 4 193 888 B1**
(45) Date of publication and mention of the grant of the patent: **10.09.2025**
(21) Application number: 21852124.3
(22) Date of filing: 27.07.2021
(51) Int. Cl.: A47J 31/06, A47J 31/36, A47J 31/44

(54) **DEVICE FOR HIGH-VOLUME DISPENSING OF ESPRESSO COFFEE**
VORRICHTUNG ZUR AUSGABE VON ESPRESSO-KAFFEE IN GROSSEN MENGEN
DISPOSITIF POUR PRÉPARATION DE CAFÉ EXPRESSO À GRAND DÉBIT

(30) Priority: 05.08.2020 ES 202031756 U
(43) Date of publication of application: 14.06.2023
(73) Proprietor: La Rocca Expres, S.A., 41500 Alcala de Guadaira-Sevilla (ES)
(72) Inventor: BORREGO GOMEZ, Francisco, 41005 SEVILLA (ES)
(74) Representative: Del Valle Valiente, Sonia
(86) International application number: PCT/ES2021/070568
(87) International publication number: WO 2022/029352

(56) References cited:
- WO-A1-2013/032104
- ES-U- 1 083 605
- US-A- 5 870 943
- US-A- 6 044 754
- US-A1- 2006 266 222
- US-A1- 2014 216 266

## Description

### OBJECT OF THE INVENTION

The present invention relates to a device for high-volume dispensing of espresso coffee.

### BACKGROUND OF THE INVENTION

Espresso coffee is known as the coffee prepared by leaching a quantity of ground coffee through which a flow of water at high temperature and pressure passes, collecting the water internally with the impregnation of the substances typical of coffee, as a drink. This process is known in the technical sector of industrial coffee machines as brewing.

Currently, espresso coffee is dispensed with machines equipped with an inlet for pressurised hot water, a plate or pot where the coffee is deposited, which is equipped with a bottom filter, and valves arranged at the inlet for hot water to spray the entire section of the plate and ensure that the moisture reaches the entire volume of ground coffee deposited.

The problem with these coffee makers lies in their mechanical complexity, especially the arrangement of valves that requires the use of very high pressures, and the fact that these valves are parts that are clogged with deposits that are left by high-temperature water passing through and being subjected to sudden cooling; therefore, in addition to the possible unhealthiness of said deposits, the reduction in the passage of the valves worsens the performance of the machine and therefore requires frequent cleaning and even replacement. In addition, for the same reasons of water temperature and pressure, the filters that retain the ground coffee in the plate clog easily and require frequent cleaning.

These drawbacks are solved with the coffee brewing device of the invention.

Document US 2014/216266 discloses an injection unit for an espresso coffee machine

### DESCRIPTION OF THE INVENTION

The device for high-volume dispensing of espresso coffee of the invention is of the type comprising a pot into which the ground coffee is placed, equipped with a bottom filter and through which a flow of hot water passes, and according to the invention, comprises:
- a diffusion chamber, comprising
   *at least one inlet for hot water at a temperature comprised between 90 and 110 degrees (ideally 100 degrees) and at a pressure of at least 7 atm (and better if it is 8), with a volume that can reach up to 5 litres per minute,
   *a plurality of small-diameter outlets that are in communication with the pot (ideally with the top thereof, which is the situation that will occur if these elements are arranged vertically),
- wherein the pot has a capacity of at least 1500-2000 cubic centimetres (1.5-2 litres),
- wherein the filter is arranged at the outlet of the pot, said filter comprising a plate with through-holes in which bushings are arranged provided with a bottom ascending blind hole, a top conical projection, and grooves made in said conical projection that are in communication with the blind hole, and
- a collector arranged at the outlet of the filter, comprising an outlet hole for channelling the dispensed coffee.

In this way, the diffusion chamber achieves optimal diffusion of the water throughout the entire section of the pot, without requiring valves, and the effectiveness achieved is so great that large-capacity pots can be arranged, thus achieving high-volume instant production of espresso coffee, up to 5 litres per minute, which is much higher than current espresso machines. Therefore, it is ideal for serving communities, hotels, hospitals and the like, without requiring conventional espresso machines with valves and the like that get clogged and increase the complexity and maintenance of the coffee maker.

In addition, the brewing conditions and the configuration of the filter mean that it clogs less frequently and facilitates the cleaning of residues or grounds that the brewing of coffee, or any other type of infusion (such as chamomile, tea, etc.) can leave.

### BRIEF DESCRIPTION OF THE DRAWINGS

Figure 1 shows an assembly cross section of the device of the invention.
Figures 2a, 2b, 2c and 2d respectively show a bottom plan view, a perspective view from a top point of view, a cross section and a side view of the cover of the diffusion chamber of the preferred variant of the device of the invention.
Figures 3a, 3b, 3c and 3d respectively show a bottom plan view, a perspective view from a top point of view, a cross section and a side view of the bottom plate of the diffusion chamber of the preferred variant of the device of the invention.
Figures 4a, 4b, 4c and 4d respectively show a bottom plan view, a perspective view from a top point of view, a cross section and a side view of the pot of the preferred variant of the device of the invention, which remains internally closed through the collector shown in Figures 7a, 7b, 7c and 7d.
Figures 5a, 5b, 5c and 5d respectively show a bottom plan view, a perspective view from a top point of view, a cross section and a side view of the filter of the preferred variant of the device of the invention. Likewise, Figure 5b shows an enlarged detail where a filter bushing is represented before its tight insertion in the corresponding hole of the plate.
Figures 6a and 6b respectively show a perspective view from a top point of view and a side view of one of said bushings.
Figures 7a, 7b, 7c and 7d respectively show a bottom plan view, a perspective view from a top point of view, a cross section and a side view of the collector of the preferred variant of the device of the invention.

### DESCRIPTION OF A PREFERRED EMBODIMENT OF THE INVENTION

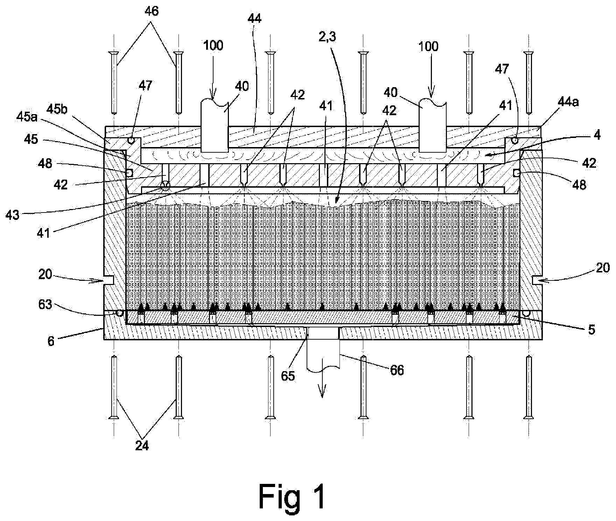

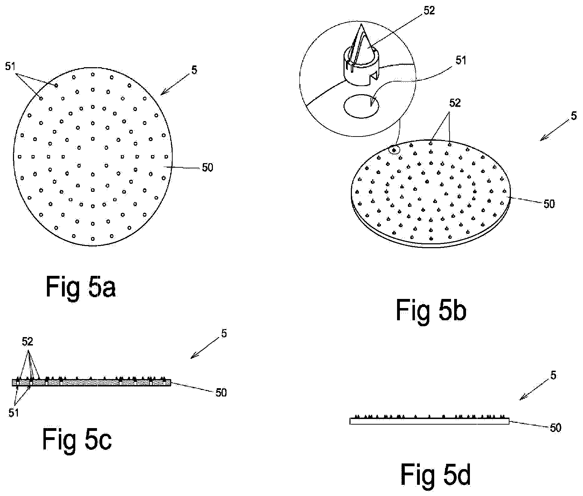

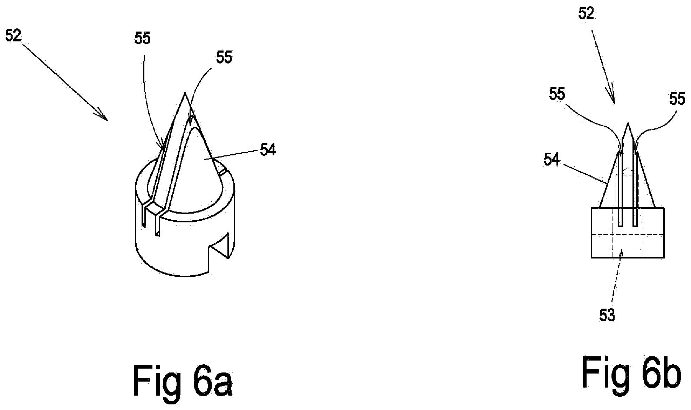

Starting with figure 1, the cross section shows that the device (1) for high-volume dispensing of espresso coffee of the invention is of the type comprising a pot (2) equipped with a bottom filter (5) into which the ground coffee (3) is placed and through which a flow (100) of hot water passes, and which according to the invention comprises:
- a diffusion chamber (4), comprising
   *at least one inlet (40) for hot water at a temperature comprised between 90 and 110 degrees (100 degrees in this specific example) and at a pressure of at least 7 atm (8 atm in this specific example), which can process volumes of up to 5 litres per minute,
   *a plurality of small-diameter outlets (41, 42) that are in communication with the top of the pot (2),
- wherein the pot (2) has a capacity of at least 1500-2000 cc,
- wherein the filter (5) is arranged at the outlet of the pot (2), said filter comprising (see Figures 5a to 5d ) a plate (50) with through-holes (51) in which bushings (52) are arranged provided (see Figures 6a and 6b ) with a bottom ascending blind hole (53), a top conical projection (54), and grooves (55) made in said conical projection (54) that are in communication with the blind hole (53) enabling and filtering the passage of water with the substances typical of coffee, and (return to Figure 1 )
- a collector (6) arranged at the outlet of the filter (5), comprising an outlet hole (60) for channelling the dispensed coffee.

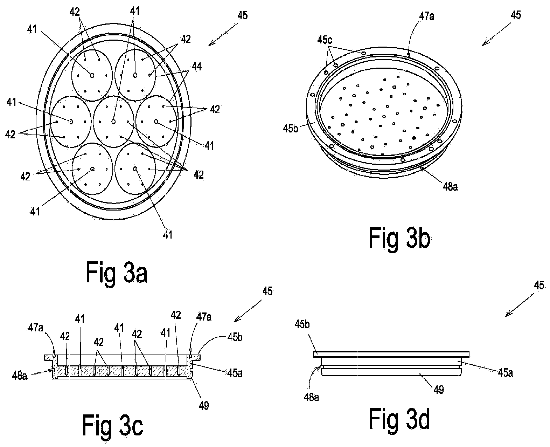

Most preferably, the small-diameter outlets from the diffusion chamber comprise (see Figures 1 and 3a-3d):
- larger outlets (41), which have a larger diameter, and
- smaller outlets (42), which have a smaller diameter, and which further comprise a constriction (43) at the outlet thereof to produce a dispersion by means of the venturi effect. Preferably, the smaller outlets (42) have a diameter of 3 mm and their constrictions (43) have a diameter of 1.5 mm; while the larger outlets (41) have a diameter of 5 mm. In addition, it is preferred that there are a greater number of smaller outlets (41), and that they are arranged in circular distributions (44) around the larger outlets (42) (see Figure 3a). This entire configuration achieves optimal diffusion of the water, in the form of spraying that covers the entire section of the pot (2), with a reinforcement for the passage of water between the smaller outlets (42), which have a wider dispersion cone, due to the larger outlets (1).

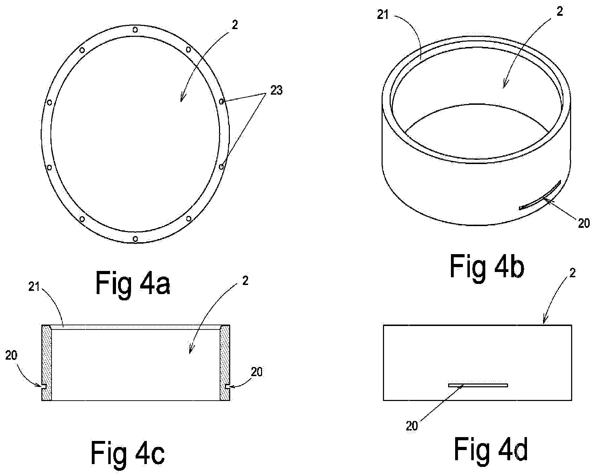

Moreover, it is preferred that the pot (2) comprises (see Figure 1 and Figures 4b to 4d) outer lateral toolings (20) (grooves) for fastening to a structure, not shown.

It is also desirable that the diffusion chamber (4), the pot (2), the filter (5) and the collector (6) are all arranged in a consecutive vertical position, as shown in Figure 1. This arrangement is necessary from the pot (2), but it is preferable to also place the diffusion chamber (4) vertically on the same.

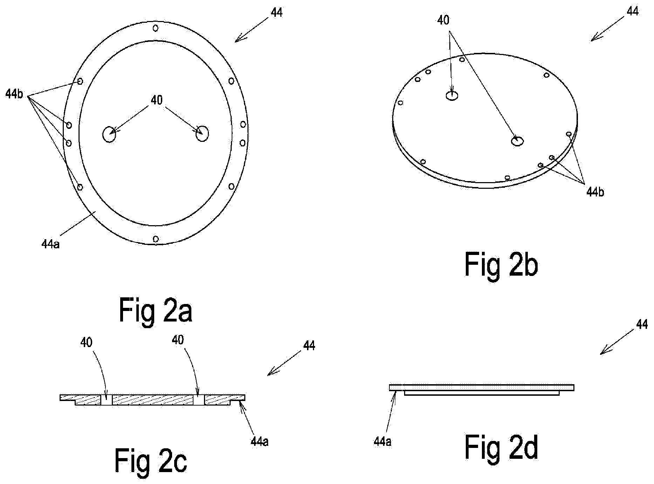

Moreover, the diffusion chamber (4) comprises (see Figures 1, 2a-2d and 3a-3d):
*a top cover (44) provided with the inlets (40) for hot water and a thinner perimeter wing (44a), and
*a bottom plate (45) provided with small-diameter outlets (41, 42) and a top perimeter wall (45a) provided with a top widening (45b) having a shape suited to receive support for the perimeter wing (44a) of the cover (44);
the perimeter wing (44a) of the cover (44) comprising first holes (44b) and the widening (45b) comprising first threaded toolings (45c) for the passage of first fixing screws (46) therebetween; and comprising a first sealing gasket (47) between the perimeter wing (44a) of the cover (44) and the top widening (45b) of the top perimeter wall (45a) of the bottom plate (45) (and its corresponding first seat (47a)). This facilitates manufacture, allows registration for cleaning, and promotes robust mounting suitable for withstanding operating pressures without leakage. Moreover, the bottom plate (45) has the same or similar outer diameter as the inner diameter of the pot (2) to be inserted into the same with adjustment and the necessary mechanical tolerances until reaching the widening (45b); comprising a second outer perimeter sealing gasket (48) (and its corresponding second seat (48a)) and a bottom frustoconical termination (49); and the pot (2) comprising a corresponding top frustoconical mouthpiece (21) (see Figures 4b and 4c ).

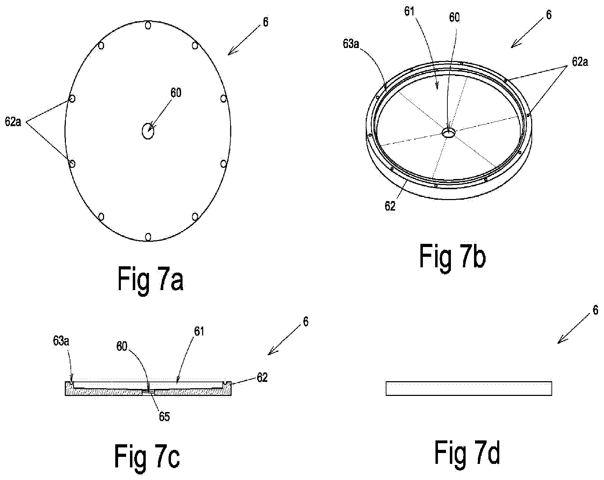

For its part, the filter (5) has the shape of a biscuit and the same or similar diameter as the inner diameter of the pot (2) to be inserted with the adjustment that the mechanical tolerances allow in the bottom of the same, while the collector (6) comprises (see Figures 1 and 7b-7c ) a bottom bowl (61) where the centred outlet hole (60) is arranged, and a perimeter annular heel (62) with inner and outer diameters equal to the inner and outer diameters of the pot (2); said annular heel (62) comprising second holes (62a) and the pot (2) comprising second threaded toolings (23) on the bottom edge thereof (see Figure 4a ) for joining both elements through second screws (24) (see Figure 1 ); comprising a third sealing gasket (63) therebetween (and the corresponding third seat (63a) (return to Figures 7b-7c ) made in the annular heel (62) for this purpose). This also facilitates assembly and disassembly as the screws are easily accessible and good tightening and sealing is achieved.

For a pot capacity of 1500-2000 cc, it is preferred that the pot (2) has an inner diameter of 18 centimetres (where better results have been obtained) and an outer diameter of 20 centimetres sufficient to receive the joining screws.

Moreover, the centred outlet hole (60) of the collector comprises an inner thread (65) for coupling a fitting or a tube (66).

Finally, it is important to indicate that it is preferred that all the elements are made of food-grade stainless steel.

## Claims

1. A device (1) for high-volume dispensing of espresso coffee; of the type which comprises a pot (2) equipped with a bottom filter (5) into which the ground coffee (3) is placed and through which a flow of hot water passes, comprising:
- a diffusion chamber (4), comprising
*at least one inlet (40) for hot water at a temperature comprised between 90 and 110 degrees and at a pressure of at least 7 atm, capable of supplying volumes of 5 litres per minute,
*a plurality of small-diameter outlets (41, 42) that are in communication with the pot (2),
- wherein the pot (2) has a capacity of at least 1500-2000 cc,
- wherein the filter (5) is arranged at the outlet of the pot (2), said filter comprising a plate (50) with through-holes (51) in which bushings (52) are arranged provided with a bottom ascending blind hole (53), a top conical projection (54), and grooves (55) made in said conical projection (54) that are in communication with the blind hole, and
- a collector (6) arranged at the outlet of the filter (5), comprising an outlet hole (60) for channelling the dispensed coffee.

2. The device (1) for high-volume dispensing of espresso coffee according to claim 1, **wherein** the small-diameter outlets from the diffusion chamber comprise:
- larger outlets (41), which have a larger diameter, and
- smaller outlets (42), which have a smaller diameter, and which further comprise a constriction (43) at the outlet thereof.

3. The device (1) for high-volume dispensing of espresso coffee according to claim 2, **wherein** the smaller outlets (42) have a diameter of 3 mm and their constrictions (43) have a diameter of 1.5 mm; while the larger outlets (41) have a diameter of 5 mm.

4. The device (1) for high-volume dispensing of espresso coffee according to claim 2 or 3, **which** comprises a greater number of smaller outlets (41), which are arranged in circular distributions (44) around the larger outlets (42).

5. The device (1) for high-volume dispensing of espresso coffee according to any of the preceding claims, **wherein** the pot (2) comprises outer lateral toolings (20) for fastening to a structure.

6. The device (1) for high-volume dispensing of espresso coffee according to any of the preceding claims, **wherein** the diffusion chamber (4), the pot (2), the filter (5) and the collector (6) are all arranged in a consecutive vertical position.

7. The device (1) for high-volume dispensing of espresso coffee according to any of the preceding claims, **wherein** the diffusion chamber (4) comprises:
*a top cover (44) provided with the inlets (40) for hot water and a thinner perimeter wing (44a), and
*a bottom plate (45) provided with small-diameter outlets (41, 42) and a top perimeter wall (45a) provided with a top widening (45b) having a shape suited to receive support for the perimeter wing (44a) of the cover (44);
the perimeter wing (44a) of the cover (44) comprising first holes (44b) and the widening (45b) comprising first threaded toolings (45c) for the passage of first fixing screws (46) therebetween; and comprising a first sealing gasket (47) between the perimeter wing (44a) of the cover (44) and the top widening (45b) of the top perimeter wall (45a) of the bottom plate (45).

8. The device (1) for high-volume dispensing of espresso coffee according to claim 7, **wherein** the bottom plate (45) has the same outer diameter as the inner diameter of the pot (2) until reaching the widening (45b); comprising a second outer perimeter sealing gasket (48) and a bottom frustoconical termination (49); and the pot (2) comprising a corresponding top frustoconical mouthpiece (21).

9. The device (1) for high-volume dispensing of espresso coffee according to any of the preceding claims, **wherein** the filter (5) has the shape of a biscuit and the same diameter as the inner diameter of the pot (2) to be inserted into the bottom of the same, while the collector (6) comprises a bottom bowl (61) where the centred outlet hole (60) is arranged, and a perimeter annular heel (62) with inner and outer diameters equal to the inner and outer diameters of the pot (2); said annular heel (62) comprising second holes (62a) and the pot (2) comprising second threaded toolings (23) on the bottom edge thereof for joining both elements through second screws (24); comprising a third sealing gasket (63) therebetween.

10. The device (1) for high-volume dispensing of espresso coffee according to any of the preceding claims, **wherein** the pot (29) has an inner diameter of 18 centimetres, and an outer diameter of 20 centimetres.

11. The device (1) for high-volume dispensing of espresso coffee according to any of the preceding claims, **wherein** the centred outlet hole (60) of the collector comprises an inner thread (65).

12. The device (1) for high-volume dispensing of espresso coffee according to any of the preceding claims, **wherein** all the elements are made of food-grade stainless steel.

## Patentansprüche

1. Vorrichtung (1) zum Ausgeben einer großen Menge von Espressokaffee; der Art, die einen Behälter (2) umfasst, der mit einem Bodenfilter (5) versehen ist, in das der gemahlene Kaffee (3) gegeben wird und durch das ein Fluss von Wasser durchgeleitet wird, die Folgendes umfasst:
- eine Diffusionskammer (4), die Folgendes umfasst
*mindestens einen Einlass (40) für heißes Wasser mit einer Temperatur zwischen 90 und 110 Grad und einem Druck von mindestens 7 atm, der in der Lage ist, Volumen von 5 Liter pro Minute auszugeben,
*eine Vielzahl von Auslässen (41, 42) mit kleinem Durchmesser, die mit dem Behälter (2) in Kommunikation stehen,
- wobei der Behälter (2) eine Kapazität von mindestens 1500-2000 cm³ aufweist,
- wobei das Filter (5) am Auslass des Behälters (2) angeordnet ist, wobei das Filter eine Platte (50) mit Durchgangslöchern (51) umfasst, in der Buchsen (52) angeordnet sind, die mit einem unteren aufsteigenden Blindloch (53), einem oberen konischen Vorsprung (54) und Rillen (55) versehen sind, die im konischen Vorsprung (54) gebildet sind und mit dem Blindloch in Kommunikation stehen, und
- einen Sammler (6), der im Auslass des Filters (5) angeordnet ist, der ein Auslassloch (60) zum Kanalisieren des ausgegebenen Kaffees umfasst.

2. Vorrichtung (1) zum Ausgeben von Espressokaffee in großen Mengen nach Anspruch 1,
wobei die Auslässe mit kleinem Durchmesser von der Diffusionskammer Folgendes umfassen:
- größere Auslässe (41), die einen größeren Durchmesser aufweisen, und
- kleinere Auslässe (42), die einen kleineren Durchmesser aufweisen und die ferner eine Verengung (43) am Auslass davon aufweisen.

3. Vorrichtung (1) zum Ausgeben von Espressokaffee in großen Mengen nach Anspruch 2, wobei die kleineren Auslässe (42) einen Durchmesser von 3 mm aufweisen und deren Verengungen (43) einen Durchmesser von 1,5 mm aufweisen; während die größeren Auslässe (41) einen Durchmesser von 5 mm aufweisen.

4. Vorrichtung (1) zum Ausgeben von Espressokaffee in großen Mengen nach Anspruch 2 oder 3, die eine größere Anzahl von kleineren Auslässen (41) umfasst, die in kreisförmigen Verteilungen (44) um die größeren Auslässe (42) angeordnet sind.

5. Vorrichtung (1) zum Ausgeben von Espressokaffee in großen Mengen nach einem der vorhergehenden Ansprüche, wobei der Behälter (2) Fertigungsmittel (20) zum Befestigen an einer Struktur aufweist.

6. Vorrichtung (1) zum Ausgeben von Espressokaffee in großen Mengen nach einem der vorhergehenden Ansprüche, wobei die Diffusionskammer (4), der Behälter (2), das Filter (5) und der Sammler (6) alle in einer aufeinanderfolgenden vertikalen Position angeordnet sind.

7. Vorrichtung (1) zum Ausgeben von Espressokaffee in großen Mengen nach einem der vorhergehenden Ansprüche, wobei die Diffusionskammer (4) Folgendes umfasst:
*eine obere Abdeckung (44), die mit den Einlässen (40) für heißes Wasser und einem dünneren Umfangsflügel (44a) versehen ist, und
*eine Bodenplatte (45), die mit Auslässen (41, 42) mit kleinem Durchmesser versehen ist, und eine obere Umfangswand (45a) versehen ist, die mit einer oberen Aufweitung (45b) versehen ist, die eine Form aufweist, die geeignet ist, eine Stützung für den Umfangsflügel (44a) der Abdeckung (44) zu empfangen;
wobei der Umfangsflügel (44a) der Abdeckung (44) erste Löcher (44b) umfasst und die Aufweitung (45b) Fertigungsmittel (45c) mit Gewinde für die Durchführung von ersten Befestigungsschrauben (46) dazwischen umfasst; sowie eine erste Dichtung (47) zwischen dem Umfangsflügel (44a) der Abdeckung (44) und der oberen Aufweitung (45b) der oberen Umfangswand (45a) der Bodenplatte (45) umfasst.

8. Vorrichtung (1) zum Ausgeben von Espressokaffee in großen Mengen nach Anspruch 7, wobei die Bodenplatte (45) denselben Außendurchmesser aufweist wie der Innendurchmesser des Behälters (2), bis sie die Aufweitung (45b) erreicht; die eine zweite Dichtung (48) am Außenumfang und einen unteren kegelstumpfförmigen Abschluss (49) umfasst; und wobei der Behälter (2) ein entsprechendes oberes kegelstumpfförmiges Mundstück (21) umfasst.

9. Vorrichtung (1) zum Ausgeben von Espressokaffee in großen Mengen nach einem der vorhergehenden Ansprüche, wobei das Filter (5) die Form eines Kekses und denselben Durchmesser wie der Innendurchmesser des Behälters (2), der in den Boden desselben einzusetzen ist, während der Sammler (6) eine untere Schüssel (61) umfasst, wo das zentrierte Auslassloch (60) angeordnet ist, und eine ringförmige Umfangsferse (62) mit einem Innen- und Außendurchmesser, die dem Innen- und dem Außendurchmesser des Behälters (2) gleich sind, aufweist; wobei die ringförmige Ferse (62) zweite Löcher (62a) umfasst und wobei der Behälter (2) zweite Fertigungsmittel (23) mit Gewinde an der Unterkante davon zum Verbinden von beiden Elementen mittels zweiter Schrauben (24) umfasst; die eine dritte Dichtung (63) dazwischen umfasst.

10. Vorrichtung (1) zum Ausgeben von Espressokaffee in großen Mengen nach einem der vorhergehenden Ansprüche, wobei der Behälter (29) einen Innendurchmesser von 18 Zentimeter und einen Außendurchmesser von 20 Zentimeter aufweist.

11. Vorrichtung (1) zum Ausgeben von Espressokaffee in großen Mengen nach einem der vorhergehenden Ansprüche, wobei das zentrierte Auslassloch (60) des Sammlers ein Innengewinde (65) umfasst.

12. Vorrichtung (1) zum Ausgeben von Espressokaffee in großen Mengen nach einem der vorhergehenden Ansprüche, wobei alle Elemente aus Edelstahl in Lebensmittelqualität bestehen.

## Revendications

1. Dispositif (1) pour la distribution à haut volume de café expresso ; du type qui comprend un réservoir (2) équipé d'un filtre inférieur (5) dans lequel le café moulu (3) est placé et à travers lequel passe un flux d'eau chaude, comprenant :
- une chambre de diffusion (4), comprenant
*au moins une entrée (40) pour l'eau chaude à une température comprise entre 90 et 110 degrés et à une pression d'au moins 7 atm, capable de fournir des volumes de 5 litres par minute,
*une pluralité de sorties de petit diamètre (41, 42) qui sont en communication avec le réservoir (2),
- dans lequel le réservoir (2) a une capacité d'au moins 1500 à 2000 cm³,
- dans lequel le filtre (5) est disposé à la sortie du réservoir (2), ledit filtre comprenant une plaque (50) avec des trous traversants (51) dans lesquels sont disposées des bagues (52) dotées d'un trou borgne ascendant inférieur (53), une saillie conique supérieure (54) et des rainures (55) réalisées dans ladite saillie conique (54) qui sont en communication avec le trou borgne, et
- un collecteur (6) disposé à la sortie du filtre (5), comprenant un orifice de sortie (60) pour canaliser le café distribué.

2. Dispositif (1) pour la distribution à haut volume de café expresso selon la revendication 1,
**dans lequel** les sorties de petit diamètre de la chambre de diffusion comprennent :
- des sorties plus grandes (41), qui ont un diamètre plus grand, et
- des sorties plus petites (42), qui ont un diamètre plus petit, et qui comprennent en outre un étranglement (43) à la sortie de celles-ci.

3. Dispositif (1) pour la distribution à haut volume de café expresso selon la revendication 2, **dans lequel** les sorties plus petites (42) ont un diamètre de 3 mm et leurs rétrécissements (43) ont un diamètre de 1,5 mm ; tandis que les sorties plus grandes (41) ont un diamètre de 5 mm.

4. Dispositif (1) pour la distribution à haut volume de café expresso selon la revendication 2 ou 3, **qui** comprend un plus grand nombre de sorties plus petites (41), qui sont disposées en distributions circulaires (44) autour des sorties plus grandes (42).

5. Dispositif (1) pour la distribution à haut volume de café expresso selon l'une des revendications précédentes, **dans lequel** le réservoir (2) comprend des outillages latéraux externes (20) pour une fixation à une structure.

6. Dispositif (1) pour la distribution à haut volume de café expresso selon l'une des revendications précédentes, **dans lequel** la chambre de diffusion (4), le réservoir (2), le filtre (5) et le collecteur (6) sont tous disposés dans une position verticale consécutive.

7. Dispositif (1) pour la distribution à haut volume de café expresso selon l'une des revendications précédentes, **dans lequel** la chambre de diffusion (4) comprend :
*un couvercle supérieur (44) doté des entrées (40) pour l'eau chaude et d'une aile périphérique (44a) plus mince, et
*une plaque inférieure (45) dotée de sorties de petit diamètre (41, 42) et d'une paroi périphérique supérieure (45a) dotée d'un élargissement supérieur (45b) ayant une forme adaptée pour recevoir un support pour l'aile périphérique (44a) du couvercle (44) ;
l'aile périphérique (44a) du couvercle (44) comprenant des premiers trous (44b) et l'élargissement (45b) comprenant des premiers outillages filetés (45c) pour le passage de premières vis de fixation (46) entre eux ; et comprenant un premier joint d'étanchéité (47) entre l'aile périphérique (44a) du couvercle (44) et l'élargissement supérieur (45b) de la paroi périphérique supérieure (45a) de la plaque inférieure (45).

8. Dispositif (1) pour la distribution à haut volume de café expresso selon la revendication 7, **dans lequel** la plaque de fond (45) a le même diamètre externe que le diamètre interne du réservoir (2) jusqu'à ce qu'elle atteigne l'élargissement (45b) ; comprenant un deuxième joint d'étanchéité de périmètre externe (48) et une terminaison tronconique inférieure (49) ; et le réservoir (2) comprenant un embout tronconique supérieur (21) correspondant.

9. Dispositif (1) pour la distribution à haut volume de café expresso selon l'une des revendications précédentes, **dans lequel** le filtre (5) a la forme d'un biscuit et le même diamètre que le diamètre interne du réservoir (2) pour être inséré dans le fond de celui-ci, tandis que le collecteur (6) comprend une cuvette de fond (61) où est disposé le trou de sortie centré (60), et un talon annulaire périphérique (62) avec des diamètres interne et externe égaux aux diamètres interne et externe du réservoir (2) ; ledit talon annulaire (62) comprenant des seconds trous (62a) et le réservoir (2) comprenant des seconds outillages filetés (23) sur le bord inférieur de celui-ci pour assembler les deux éléments par le biais de secondes vis (24) ; comprenant un troisième joint d'étanchéité (63) entre les deux.

10. Dispositif (1) pour la distribution à haut volume de café expresso selon l'une des revendications précédentes, **dans lequel** le réservoir (29) a un diamètre interne de 18 centimètres et un diamètre externe de 20 centimètres.

11. Dispositif (1) pour la distribution à haut volume de café expresso selon l'une des revendications précédentes, **dans lequel** le trou de sortie centré (60) du collecteur comprend un filetage interne (65).

12. Dispositif (1) pour la distribution à haut volume de café expresso selon l'une des revendications précédentes, **dans lequel** tous les éléments sont en acier inoxydable de qualité alimentaire.
